# EUROPÄISCHE PATENTSCHRIFT

(11) **EP 4 359 736 B1**
(45) Veröffentlichungstag und Bekanntmachung des Hinweises auf die Patenterteilung: **05.03.2025**
(21) Anmeldenummer: 21742310.2
(22) Anmeldetag: 23.06.2021
(51) Int. Cl.: G01D 5/347, B66B 1/34

(54) **MESSBAND FÜR AUFZUGSANLAGEN**
MEASURING STRIP FOR ELEVATOR SYSTEMS
BANDE DE MESURE POUR SYSTÈMES D'ASCENSEUR

(43) Veröffentlichungstag der Anmeldung: 01.05.2024
(73) Patentinhaber: Grimm, Felix, 78239 Rielasingen (DE)
(72) Erfinder: ROHR, Stephan, 9495 Triesen (LI)
(74) Vertreter: Patent- und Rechtsanwälte Behrmann Wagner PartG mbB
(86) Internationale Anmeldenummer: PCT/EP2021/067237
(87) Internationale Veröffentlichungsnummer: WO 2022/268314

(56) Entgegenhaltungen:
- EP-B1- 2 842 900
- WO-A1-2021/175421
- DE-A1- 102017 120 970
- DE-U1- 29 608 551

## Beschreibung

Die vorliegende Erfindung betrifft ein Messband bzw. Messwertgeber zur Bestimmung der Position eines Fahrkorbs in einem Aufzugschacht und ein das Messband aufweisendes Messsystem.

Vorrichtungen zur Positionserkennung eines Fahrkorbs einer Aufzugsanlage sind aus dem Stand der Technik bereits bekannt. Diese dienen der Bereitstellung von Informationen über die aktuelle Position des Fahrkorbs entlang des Aufzugsschachts bzw. der zugehörigen Aufzugsschienen im Schacht. Neben einfachen Positionsgebern wie beispielsweise Schachtschaltern, welche über eine aktuelle Fahrkorbposition an vordefinierten Stellen im Aufzugsschacht Rückmeldung geben, existieren auch inkrementelle Positionsgeber, welche an jeder Stelle im Schacht eine genaue Positionsbestimmung ermöglichen.

EP 3 231 753 lehrt beispielsweise eine Aufzugsanlage mit einem im Aufzugsschacht angeordneten Messband zur Positionsbestimmung des Fahrkorbs im Aufzugsschacht. Das Messband weist eine optische Kodierung in Form von aufeinanderfolgenden Positionsmustern, insbesondere 2D-Codes, zur Längenmessung auf. Am Fahrkorb ist eine Sensoreinrichtung befestigt, die eine Beleuchtungsquelle und einen Sensor umfasst, welche ein Detektionsfeld zum Detektieren des Messbandes und Auswerten einer entsprechenden Fahrkorbposition umfasst. Ein derartiges Messband ist üblicherweise als Stahlband ausgeführt, an welchem der optische Code aufgedruckt und mit einer Kunststoffschicht umschlossen ist.

Die EP 2 842 900 B1 offenbart ein Messband mit einer Markierungseinheit zur Markierung von Positionen im Aufzugschacht, wobei die Markierungseinheit entlang der Länge des als Stahlband ausgebildeten Messbandes verläuft, und wobei eine Kommunikationsleitung entlang der Länge des Messbands verläuft und als elektrische Leitung zur Übermittlung eines elektrischen Signals oder als Glasfaserleitung zur Übermittlung eines optischen Signals ausgebildet ist.

Ebenfalls bekannt sind auf magnetischer Beeinflussung oder induzierten Wechselfelder basierende Systeme, in welchen eine Kodierung in ein Stahlband eingebracht ist oder magnetisch beeinflussbar eingekoppelt wird.

DE 10 2004 043 099 A1 offenbart beispielsweise eine Vorrichtung zur Positionsbestimmung eines Aufzugsfahrkorbs, wobei in ein parallel zu Aufzugsschienen gespanntes, elektrisch leitfähiges Seil elektromagnetische Wechselfelder eingebracht werden, die durch einen am Fahrkorb angeordneten Magneten beeinflusst werden. Eine nicht am Fahrkorb angeordnete Auswerteeinrichtung detektiert die Fahrkorbposition durch Erfassung einer durch den Magneten am Fahrkorb bewirkten Ablenkung.

EP 0 927 674 A1 offenbart einen am Fahrkorb bzw. Fahrzeug befestigte Lesekopf zur Auswertung eines entlang einer Schiene gespannten magnetisch kodierten Bands, wobei der Lesekopf magnetisch empfindliche Sensoren zur Positionsbestimmung mittels der Kodierung im Band aufweist.

Die WO 2021/175421 A1 offenbart ein Messband für Aufzüge mit einer magnetisch auszulesenden Kodierung zur Positionsbestimmung eines Aufzugskorbs.

Die DE 296 08 551 U1 offenbart eine Messvorrichtung mit absenkbarer Messsonde mit einer optisch auslesbaren Kodierung für Grundwasserbrunnen.

Die DE 10 2017 120 970 A1 offenbart ein Textilband mit einer optischen Kodierung zur Positionsbestimmung für ein in der Hand zu haltendes Messsystem.

Eine Problematik bei den bekannten Vorrichtungen und Systemen ist die Aufrechterhaltung einer zuverlässigen Positionserkennung über mehrere Jahre oder Jahrzehnte hinweg. Insbesondere kann es aufgrund von Umwelteinflüssen wie Staub, Feuchtigkeit, Stahlbetonabrieb etc. über die Jahre dazu kommen, dass die im Schacht aufgehängten Positionsbänder verschmutzen, das Stahlband rostet oder sich bei mehrschichtigen Bändern Schichten ablösen. Eine weitere Problematik ist die Aufrechterhaltung einer definierten Anordnung des Bandes im Aufzugsschacht unter Beibehaltung einer zuverlässigen Positionserkennung, insbesondere bei neugebauten Gebäuden, die sich erst nach einiger Zeit setzen, das heißt aufgrund von Materialbelastungen, Veränderungen in der Bausubstanz etc. eine Stauchung erfahren, wodurch insbesondere ein Wölben und/oder Verbiegen und im schlimmstenfalls eine Beschädigung des Bandes auftreten kann. Dies kann durch manuelles Nachjustieren oder durch eine zusätzlich vorzusehende Spann- und/oder Lagereinrichtung für das Band im Aufzugsschacht adressiert werden. Letztere kann jedoch einen deutlichen Kostenmehraufwand mit sich bringen und die Störanfälligkeit der Vorrichtung bzw. des Systems erhöhen.

Aufgabe der Erfindung ist es, einen verbesserten Messwertgeber, insbesondere ein Messband, und ein zugehöriges Messsystem bereitzustellen, welcher bzw. welches die oben genannten Nachteile des Standes der Technik adressiert. Hierbei soll neben einer zuverlässigen Erfassung einer Fahrkorbposition im Aufzugsschacht eine einfache und kostengünstige Herstellbarkeit und vorzugsweise eine vereinfachte Anbringbarkeit im Aufzugsschacht ermöglicht werden. Diese Aufgabe wird durch den Gegenstand der unabhängigen Ansprüche gelöst. Die Unteransprüche stellen vorteilhafte Weiterbildungen der vorliegenden Erfindung dar. Die Erfindung adressiert zudem weitere Probleme, welche in der nachfolgenden Beschreibung erläutert sind.

In einem ersten Aspekt betrifft die Erfindung ein Messband zur Bestimmung der Position eines Fahrkorbs in einem Aufzugschacht, welches vertikal im Aufzugschacht und vorzugsweise sich über wenigstens zwei Gebäudestockwerke erstreckend anordenbar ist, aufweisend einen bandförmigen Grundkörper und eine optische Kodierung, wobei der bandförmige Grundkörper aus Textilmaterial gebildet ist, und wobei die Kodierung in den Grundkörper eingebracht oder auf einer Oberfläche des Grundkörpers aufgebracht angeordnet ist.

Im Gegensatz zum bekannten Stand der Technik ist das Messband zur Positionsbestimmung des Fahrkorbs nunmehr nicht aus Metall wie beispielsweise Eisen und insbesondere Stahl gefertigt, sondern besteht aus einem Textilgrundkörper, in welchen die Positionskodierung eingebracht oder aufgebracht ist. Hierdurch werden einerseits ein leichteres Gesamtgewicht des Bandes als auch erweiterte Einsatzmöglichkeiten erreicht. Insbesondere ist der Einsatz des Messbandes auch in rauen Umweltbedingungen, beispielsweise bei Salzwassereinfluss, wie beispielsweise für die Positionsbestimmung auf Schiffen, Windkraftanlagen, Werften, Kranen etc. geeignet. Zudem weist der textile Grundkörper eine höhere Banddehnung und Flexibilität als die bekannten Stahlmessbänder auf, wodurch der Einbau und die Positionierung in einem Aufzugsschacht vereinfacht wird. Des Weiteren ermöglicht das erfindungsgemäße Messband auch eine einfachere und schnellere Fertigung. Insbesondere ist im Gegensatz zum Stand der Technik keine aufwendige Verklebung aus einem Stahlband und einer darauf anzuordnenden weiteren Schicht aus unterschiedlichem Material wie beispielsweise einer Gummimischung notwendig, welche anschließen magnetisiert oder bedruckt wird.

Der bandförmige Grundkörper ist vorzugsweise aus Textilmaterial, insbesondere Textilfaser, gewebt oder gewirkt. Alternativ kann der Grundkörper auch gesponnen oder gestickt sein.

Der bandförmige Grundkörper weist vorzugsweise eine konstante Breite von 5 bis 30mm, mehr bevorzugt von 8 bis 25, weiterhin bevorzugt von 8 bis 14mm, senkrecht zur Längserstreckungsrichtung des Messbands auf. Das Messband weist vorzugsweise eine Dicke von 0,3 bis 5mm, mehr bevorzugt von 0,5 bis 3mm und besonders bevorzugt von 0,5 bis 2mm auf. Die Länge des bandförmigen Grundkörpers ist auf den jeweiligen Aufzugsschacht angepasst, in welchem dieser angeordnet werden soll. Beispielhaft kann dies für ein fünfstöckiges Gebäude eine Länge von circa 15m aufweisen.

Unter optischer Kodierung wird vorliegend eine Kodierung verstanden, welche mittels eines zugeordneten optischen Sensors auslesbar bzw. abtastbar ist.

Die Kodierung kann in den Grundkörper eingebrachte Öffnungen aufweisen. Die können hinsichtlich Form und/oder Anordnung in Messbandlängsrichtung und/oder in Messbandquerrichtung variierend ausgebildet sein. Die Kodierung kann hierbei insbesondere mehrere in Messbandlängsrichtung aufeinanderfolgende Öffnungen unterschiedlicher Form und/oder Größe umfassen. Die Öffnungen können eine insbesondere rechteckige und/oder runde Form aufweisen und sich in ihrer Längen- und/oder Breitenerstreckung zur Ausbildung eines Kodemarkenmusters unterscheiden.

Die Öffnungen können im Textilgrundkörper eingestanzt oder während des Herstellungsverfahrens im Textilgrundkörper eingearbeitet, insbesondere eingewebt oder eingewirkt sein.

In einer bevorzugten Ausführungsform weist der Grundkörper wenigstens eine Aufnahmeöffnung und insbesondere eine Tasche zur Aufnahme eines vorzugsweise reflektierenden, insbesondere retroreflektierenden, Kernelements auf. Die Aufnahmeöffnung bzw. Tasche ist hierbei im Inneren des Grundkörpers ausgebildet und mittels wenigstens einer, insbesondere schlitzartigen, Öffnung zugänglich. Das Kernelement ist hierbei vorzugsweise derart im Inneren des Grundkörpers anordenbar oder angeordnet, dass im Grundkörper ausgebildete Öffnungen durch das Kernelement überdeckt werden. Hierdurch kann eine optisch leicht detektierbare Reflexion in den jeweiligen Öffnungen erzielt werden, welche mit einem insbesondere einseits des Messbands angeordneten optischen Sensor leicht auslesbar ist.

Der Grundkörper kann mehrere und weiter bevorzugt eine Vielzahl von derartigen Taschen zur Aufnahme und Halterung von darin anordenbaren Kernelementen aufweisen. Die Taschen können hierbei eine Tiefe bzw. Länge in Messbandlängsrichtung aufweisen, welche eine Vielzahl von Öffnungen in Messbandlängsrichtung überdeckt. Beispielsweise kann eine jeweilige Tasche eine Tiefe von mehreren Metern zur Lagerung eines entsprechend langen Kernelements aufweisen.

Die Taschen mit zugeordneten Öffnungen können regelmäßig in Messbandlängsrichtung angeordnet sein. Alternativ können die Taschen lediglich an vordefinierten Abschnitten im Messband angeordnet sein. Die Taschen können sich lediglich teilweise oder über die gesamte Messbandbreite erstrecken. Beispielsweise können sich die Taschen auch lediglich über eine vordefinierte Spur des Messbands erstrecken. Die Taschen können ausgebildet sein, ein Kernelement und/oder einen anderen Informationsträger oder ein Identifikationsobjekt wie beispielsweise einen von einer zugeordneten Sensoranordnung auslesbaren RFID-Tag oder -Chip aufzunehmen.

Alternativ kann der Textilgrundkörper zweilagig ausgebildet sein, wobei eine durchgehende, insbesondere schlitzartige Öffnung zur Aufnahme eines Kernelements im Inneren des Textilgrundkörpers ausgebildet ist. Die durchgehende Öffnung kann sich hierbei im Wesentlichen über die gesamte Länge des Messbands erstrecken.

Das Kernelement kann hierbei wie oben beschrieben reflektierend ausgebildet sein. Beispielsweise kann das Kernelement aus einem Metall gebildet sein. Alternativ kann das Kernelement aus einem Kunststoffmaterial gebildet sein, welches eine reflektierende Oberfläche aufweist. Die Oberfläche kann hierbei auch mit einer reflektierenden Schicht bedruck oder beschichtet sein. Alternativ kann das Kernelement eine einheitliche gemusterte Oberfläche aufweisen, beispielsweise aufweisend ein durchgehendes streifenförmiges oder kariertes Muster.

In einer weiteren Ausführungsform kann das Kernelement selbst eine optische Kodierung aufweisen, welche durch einen dem Messband zugeordneten optischen Sensor auslesbar ist. Das Kernelement kann hierbei derart ausgebildet sein, dass es in Zusammenwirken mit im Messband angeordneten Öffnungen eine adaptive Kodierung ausbildet. Beispielweise können die an den Taschen vorgesehenen Öffnungen wenigstens teilweise eine regelmäßiges Loch- bzw. Öffnungsmuster in Bandlängsrichtung aufweisen. Hierbei kann das in die Taschen anordenbare Kernelement in Zusammenwirkung mit dem regelmäßigen Loch- bzw. Öffnungsmuster eine Kodierung des Messbandes bereitstellt. Beispielsweise kann das Kernelement lediglich teilweise, insbesondere abschnitts- oder sektorenweise retroreflektierend ausgebildet sein, wobei der Rest des Kernelements nicht reflektierend und/oder einfarbig ausgebildet ist.

In einem weiteren Ausführungsbeispiel kann die optische Kodierung durch spezifisch angeordnete und/oder ausgebildete, insbesondere längs zur Messbandlängsrichtung verlaufende Kettfäden und/oder insbesondere in Messbandquerrichtung verlaufende Schussfäden gebildet sein. Die spezifisch angeordneten und/oder ausgebildeten Kett- und/oder Schussfäden der Kodierung weisen vorzugsweise eine andere Struktur und/oder Färbung als der restliche Grundkörper des Messbands auf. Hierdurch kann eine optisch auslesbare Kodierung mittels der spezifisch angeordneten Kett- und/oder Schussfäden im Textilgrundkörper eingebracht, insbesondere eingewebt werden. Die Kett- und/oder Schussfäden können insbesondere aus einem gegenüber dem restlichen Textilgrundkörper anders strukturierten oder anders gefärbtem Textilmaterial bestehen, so dass ein ausreichender und mittels eines zugeordneten optischen Sensors erfassbarer Kontrast zum Textilgrundkörper bereitgestellt wird. Beispielsweise kann die jeweilige optische Kodierung bzw. ein gewünschtes Kodemarkenmuster durch farblich unterschiedlichen, transparenten oder reflektierenden Garn gebildet sein. Bevorzugt können beispielsweise die zuvor beschriebenen Ausnehmungen oder Löcher im Messband durch ein transparentes Garn im Messband ausgebildet sein. Hierdurch kann ein lichtdurchlässiges Kodemarkenmuster im Messband bereitgestellt werden, bei im Wesentlichen homogener Struktur des Messbandgrundkörpers.

In einer alternativen Ausführungsform kann die optische Kodierung auf den Grundkörper aufgedruckt oder aufgeklebt sein. Beispielsweise kann die Kodierung mittels eines Textildruckverfahrens auf den Grundkörper aufgedruckt werden.

Die optische Kodierung kann mehrere aufeinanderfolgende Positionsmuster umfassen, insbesondere aufweisend Barcodes, Data-Matrix Codes oder QR Codes. Diese können beispielsweise durch die zuvor beschriebenen Öffnungen im Messbandgrundkörper und/oder durch spezifisch angeordnete Kett- und/oder Schussfäden im Grundkörper ausgebildet sein. Die Kodierung kann weiterhin eine alternierende, sequentielle oder absolute Positionskodierung ausbilden oder umfassen. Die jeweilige Kodierung, insbesondere auch in der Form von Barcodes, Data-Matrix Codes oder QR Codes kann einspurig, zweispurig oder mehrspurig auf dem Messband ausgebildet oder angeordnet sein.

In einer bevorzugten Ausführungsform weist das Messband eine erste Oberfläche und eine gegenüberliegende zweite Oberfläche auf, wobei die erste und die zweite Oberfläche jeweils eine vorzugsweise unterschiedliche Kodierung aufweisen. Hierdurch kann die Informationsdichte des Messbands erhöht werden. Zur Auslesung bzw. Abtastung kann dann beidseits des Messbands ein entsprechender optischer Sensor vorgesehen sein. Bei der Ausbildung der Kodierung in Form von im Grundkörper eingebrachten Öffnungen ist vorzugsweise ein Kernelement im Inneren des Grundkörpers angeordnet, welches jeweils in der ersten und zweiten Oberfläche ausgebildete Öffnungen überdeckt.

In einer bevorzugten Ausführungsform ist die Kodierung auf einer Oberfläche des Messbands in einer in Messbandlängsrichtung verlaufenden Spur angeordnet oder ausgebildet, welche sich vorzugsweise über die gesamte Messbandbreite erstreckt. In einer weiteren Ausführungsform weist die Kodierung auf einer Oberfläche des Messbands wenigstens zwei, vorzugsweise in Messbandlängsrichtung verlaufende Spuren auf. Die wenigstens zwei Spuren können voneinander unterschiedliche Kodierungen bzw. Kodemarkenmuster aufweisen. Beispielsweise kann eine erste Spur eine inkrementelle oder alternierende Kodierung und eine zweite danebenliegende Spur eine absolute Positionskodierung umfassen bzw. ausbilden.

Weiterhin kann das Messband auch mehr als zwei, insbesondere wenigstens drei oder vier Spuren aufweisen, in welchen jeweils eine Kodierung angeordnet oder ausgebildet ist.

Das erfindungsgemäße Messband ist vorzugsweise einlagig, d.h. aus einem zusammenhängenden bandförmigen Textilgrundkörper ausgebildet. Alternativ kann das Messband zweilagig ausgebildet sein, wobei die erste und zweite Lage unter Ausbildung wenigstens einer in Längsrichtung verlaufenden Tasche oder Öffnung an den beiden Längskanten des Messbands miteinander verbunden sein kann. Hierbei kann beispielsweise ein bandartiger Textilgrundkörper in der Fertigung an einer Längskante gefaltet werden und unter Ausbildung eines in Längsrichtung verlaufenden Innenraums bzw. Öffnung an zwei aufeinanderliegenden Kanten der gegenüberliegenden Seiten miteinander verbunden werden.

Das Messband kann wenigstens eine in den Grundkörper in Längsrichtung eingearbeitete, insbesondere eingewebte oder eingewirkte, und vorzugsweise nicht-kraftaufnehmend ausgebildete Funktions- und/oder Signalleitung aufweisen. Diese kann zur Signalübertragung entlang des Messbands dienen und an vorgesehenen Kontaktstellen mittels externer Komponenten zur Signalleitung kontaktiert werden. Die wenigstens eine Funktions- und/oder Signalleitung ist vorzugsweise aus leitendem Material wie beispielsweise einem Metalldraht gebildet, welcher in den Textilgrundkörper eingebracht, insbesondere eingewebt sein kann. Hierdurch kann das Messband zusätzlich als optimiertes Trägerelement für Funktions- und/oder Signalleitungen einer Aufzugssteuerung dienen.

Weiterhin kann das Messband zusätzliche Kodemarkenmusterabschnitte zur Bereitstellung einer vordefinierten absoluten Position, insbesondere eines Inspektionsendschalters oder eines Schachtendschalters bereitstellen.

Dies kann durch ein einzigartiges und vordefiniertes absolutes Kodemarkenmuster an entsprechender Stelle im Messband ausgebildet sein. Alternativ kann ein im Messband ausgebildetes sequentielles oder inkrementelles Kodemarkenmuster an der entsprechenden Messbandposition durch eine aufgebrachte Abdeckung abgedeckt ist. Hierbei kann eine beispielsweise aus Textilmaterial bestehende Bandabdeckung abschnittsweise an der jeweiligen Position bei der Montage des Systems im Aufzugsschacht angebracht werden.

In einem weiteren Aspekt betrifft die Erfindung ein Messsystem aufweisend ein Messband wie zuvor beschrieben und eine Sensoranordnung aufweisend wenigstens einen optischen Sensor zur Auslesung der optischen Kodierung des Messbands.

Die Sensoranordnung ist dabei zur positionsfesten Anordnung an einem Fahrkorb eines Aufzugssystems vorgesehen. Der Fahrkorb mit daran befestigter Sensoranordnung fährt hierbei entlang des Messbands im Aufzugsschacht, wobei durch das Zusammenwirken von Messband und zugeordneter Sensoranordnung eine Positionsbestimmung des Fahrkorbs im Aufzugschacht ermöglicht wird.

Die Sensoranordnung ist vorzugsweise dazu eingerichtet, die Lage, Geschwindigkeit und/oder Beschleunigung eines zugeordneten Fahrkorbs durch Auslesen des Messbands an eine übergeordnete Steuerung weiterzugeben. Dies erfolgt vorzugsweise über ein Auslesen bzw. eine Abtastung der optischen Kodierung bei Bewegung der Sensoranordnung entlang des Messbands. Die Sensoranordnung und/oder die Steuerung kann hierzu einen entsprechend konfigurierten Mikrokontroller aufweisen.

Der optische Sensor der Sensoranordnung kann einen Barcodescanner, eine digitale Kamera als Kameraerfassungsmittel, eine Lichtschranke oder dergleichen aufweisen. Der optische Sensor kann eine darin integrierte oder extern bereitgestellte Lichtquelle aufweisen.

Die Sensoranordnung kann wenigstens zwei in Messbandlängsrichtung zueinander versetzt angeordnete optische Sensoren aufweisen, welche vorzugsweise parallel zur Längsrichtung des Messbands angeordnet sind. Die optischen Sensoren sind vorzugsweise im Wesentlichen senkrecht auf eine Messbandoberfläche ausgerichtet.

Die Sensoranordnung kann weiterhin unterschiedliche Sensoren umfassen und somit verschiedene Auswerteverfahren kombinieren. Beispielsweise kann die Sensoranordnung einen Lichtschrankensensor zur Auswertung von im Messband angeordneten Löchern oder transparenten Abschnitten aufweisen. Zusätzlich kann die Sensoranordnung einen Barcode-Scanner oder eine Kamera aufweisen, zum Auslesen und/oder Abtasten von reflektierenden Kodemarkenmusterabschnitten im Messband.

Alternativ oder zusätzlich kann die Sensoranordnung wenigstens zwei optische Sensoren zur Auslesung einer Kodierung auf einer ersten und zweiten Oberfläche des Messbands aufweisen. Die optischen Sensoren sind hierbei auf sich gegenüberliegende Oberflächen des Messbands ausgerichtet. Die gegenüberliegenden Sensoren können hierbei direkt gegenüberliegend angeordnet oder in Messbandlängsrichtung versetzt zueinander angeordnet sein.

Zusätzlich kann die Sensoranordnung einen RFID-Sensor aufweisen, welcher zum Auslesen eines im oder am Messband anordenbaren RFID-Chips oder -Tags ausgebildet ist.

In einem weiteren Aspekt betrifft die Erfindung ein Aufzugsystem mit einem Aufzugschacht und einen darin verfahrbar angeordneten Fahrkorb, welches ein Messsystem zur Bestimmung der Position des Fahrkorbs im Aufzugschacht wie oben beschrieben aufweist.

Weitere vorteilhafte Einzelheiten der Erfindung ergeben sich aus der nachfolgenden Beschreibung bevorzugter Ausführungsbeispiele sowie anhand der Figuren. Diese zeigen in:
- **Fig. 1**: eine schematische Seitenansicht eines bevorzugten Ausführungsbeispiels eines erfindungsgemäßen Aufzugssystems;
- **Fig. 2a,2b**: eine Aufsicht auf bevorzugte Ausführungsformen des erfindungsgemäßen Messbands;
- **Fig. 3**: eine Aufsicht auf eine weitere bevorzugte Ausführungsform des Messbands;
- **Fig. 4**: eine Schnittansicht einer weiteren bevorzugten Ausführungsform des Messbands;
- **Fig. 5**: eine perspektivische Seitenansicht eines erfindungsgemäßen Messsystems;
- **Fig. 6**: eine Aufsicht auf eine weitere bevorzugte Ausführungsform des erfindungsgemäßen Messbands; und
- **Fig. 7**: eine Aufsicht auf eine weitere bevorzugte Ausführungsform des erfindungsgemäßen Messbands mit regelmäßig angeordneten Taschen in einer Spur des Messbands.

In den Figuren sind gleiche Elemente und Elemente mit der gleichen Funktion mit den gleichen Bezugszeichen versehen.

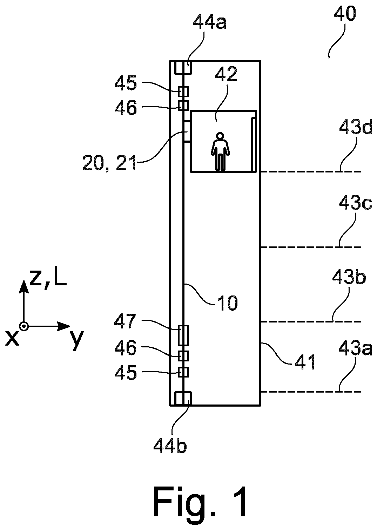

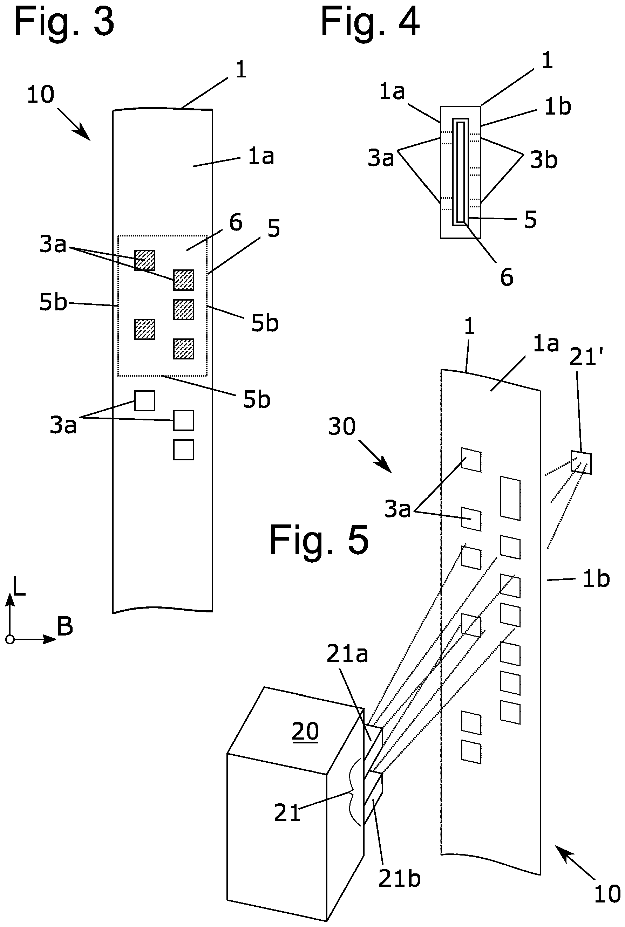

**Fig. 1** zeigt ein Aufzugssystem 40 aufweisend einen sich über mehrere Stockwerke 43a-d, beispielsweise eines Gebäudes, Schiffs, Kranauslegers oder Hochregallagers, erstreckenden Aufzugschacht 41 und einen darin verfahrbar angeordneten Fahrkorb 42. Das System weist zudem an sich bekannte Antriebsmittel (nicht gezeigt) auf, welche ein selektives Verfahren des Fahrkorbs 42 im Aufzugsschacht 41 ermöglichen. Zur Positionserkennung des Fahrkorbs im Aufzugschacht 41, weist das Aufzugssystem 40 ein unten näher beschriebenes erfindungsgemäßes Messsystem 30 (vgl. Fig. 5) auf, welches ein im Aufzugschacht 41 angeordnetes Messband 10 und eine mit diesem zusammenwirkende und am Fahrkorb 42 angeordneten Sensoranordnung 20 aufweisend einen optischen Sensor 21 aufweist. Das Messband 10 erstreckt sich vertikal vorzugsweise durch den gesamten Aufzugschacht 41 und ist mit Hilfe von vorgesehenen Befestigungsmittel 44a,44b im Aufzugschacht positionssicher gehalten.

Dass Messband 10 kann hierbei neben einer detaillierteren Positionserkennung wenigstens die Bereitstellung eines Inspektionsendschalters 45 und/oder eines Schachtendschalters 46 ermöglichen. Weiterhin kann das Messband 10 dazu ausgebildet sein, in einem vordefinierten Abschnitt 47 eine Kodierung von Parametern, insbesondere von Betriebsparametern des Aufzugssystems 40, bereitzustellen, welche beispielsweise bei der Inbetriebnahme einlernbar sind oder bei einem Sensortausch (wieder-)einge-lernt werden können. Die Kodierung der Betriebsparameter kann mittels einer im vordefinierten Abschnitt 47 angeordneten und unten näher erläuterten optische Kodierung oder eines anderer Kodierungsmittels wie beispielsweise eines RFID-Chips erfolgen, auf welchem Betriebsparameter wie beispielsweise eine Maximalgeschwindigkeit (Vₘₐₓ), Schachtendeverzögerung (ETSL), etc. hinterlegt sind.

Ein Inspektionsendschalter 45 und/oder ein Schachtendschalter 46 kann beispielsweise durch wenigstens teilweises Verdecken einer unten näher erläuterten optischen Kodierung 2 im Messband 10 bereitgestellt sein.

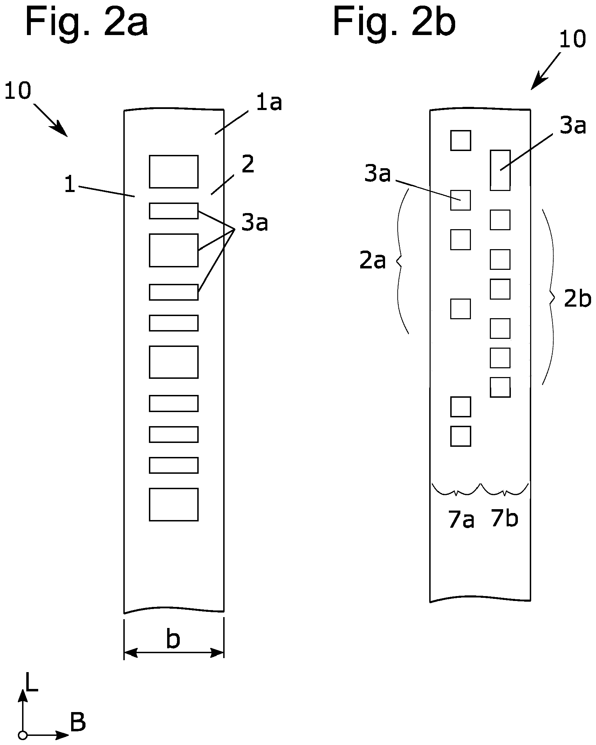

**Fig. 2a** zeigt eine schematische Aufsicht auf eine bevorzugte Ausführungsform des erfindungsgemäßen Messbands 10. Das Messband 10 umfasst einen bandförmigen Grundkörper 1 aus Textilmaterial. Dieser ist aus einem geeigneten textilen Garn, bestehend aus einer oder mehreren textilen Fasern, vorzugsweise mittels Weben oder Wirken zu einem sich längserstreckenden Band geformt. In der gezeigten Ausführungsform ist das Textilband ein Gewebe aus einer Vielzahl von Schuss- und Kettfäden. Hierbei nehmen die in Längsrichtung verlaufenden Kettfäden die Bandspannung auf.

Das Messband 10 weist vorzugsweise eine konstante Breite b von 5 bis 30mm, mehr bevorzugt von 8 bis 25mm, weiter bevorzugt von 8 bis 14mm senkrecht zur Längserstreckungsrichtung L des Messbands 10 auf. Eine Länge L des Messbands 10 ist an die jeweilige Länge des Aufzugschachts 41 angepasst.

Das Messband 10 weist eine optische Kodierung 2 auf, welche in den Grundkörper 1 eingebracht oder auf einer Oberfläche 1a des Grundkörpers 1 aufgebracht ist. In der vorliegenden Ausführungsform ist die Kodierung 2 durch in den Grundkörper eingebrachte bzw. darin ausgebildete Öffnungen oder Durchbrüche 3a gebildet. Die Öffnungen 3a sind hierbei vorzugsweise im Grundkörper 1 bei der Messbandherstellung eingewebt oder eingewirkt. Die Öffnungen 3a können alternativ durch Ausstanzen oder Ausbrennen in den Textilgrundkörper eingearbeitet sein. Die optische Kodierung 2 bildet ein vordefiniertes Muster, insbesondere Positionsmuster, im Grundkörper 1, welches durch die Sensoranordnung 20 des Messsystems 30 auslesbar ist.

Wie abgebildet, kann die Kodierung 2 beispielsweise rechteckförmige Ausbrüche mit unterschiedlicher Längserstreckungsrichtung in Messbandlängsrichtung L umfassen. Diese können beispielsweise einen optisch erfassbaren Barcode ausbilden. Das durch die Öffnungen 3a in Fig. 2a dargestellte Muster ist lediglich beispielhaft. Die Öffnungen 3a können insbesondere eine alternative geometrische Form, und/oder eine jeweils in Messbandlängsrichtung L und/oder in Messbandquerrichtung B unterschiedliche Erstreckung aufweisen. Weiterhin kann die Kodierung 2 auch mehrere in Messbandquerrichtung nebeneinander angeordnete bzw. ausgebildete Öffnungen 3a aufweisen. Die Öffnungen 3a können insbesondere auch einen Data-Matrix Code ausbilden bzw. darstellen. Die in Fig. 2a gezeigte Kodierung ist vorteilhaft als einspurige Kodierung in Messbandlängsrichtung L ausgebildet. Alternativ hierzu kann auch eine mehrspurige, insbesondere wenigstens zwei oder drei Spuren in Messbandlängsrichtung, Kodierung vorgesehen sein.

**Fig. 2b** zeigt eine weitere bevorzugte Ausführungsform des Messbands, aufweisend zwei in Längsrichtung L nebeneinander angeordnete Spuren 7a,7b, welche jeweils eine optische Kodierung 2a,2b, jeweils gebildet durch Öffnungen 3a, aufweisen. Hierbei können voneinander unabhängige Informationen in einer ersten und zweiten Spur 7a,7b kodiert sein, wodurch die Informationsdichte des Messbands erhöht wird.

**Fig. 3** zeigt eine weitere bevorzugte Ausführungsform des Messbands 10, wobei das Messband wenigstens eine Tasche 5 aufweist, welche in den Grundkörper 1 eingearbeitet ist. Die Tasche 5 kann hierbei eine vorzugsweise in Messbandquerrichtung B verlaufende, insbesondere schlitzartige Öffnung 5a aufweisen. Weiterhin kann die Tasche 5 eine umlaufende und vorzugsweise nach Außen geschlossene Innenkante 5b umfassen. Die Tasche 5 ist vorzugsweise zur Aufnahme eines Kernelements 6 ausgebildet, derart, dass in einer Oberfläche 1a des Grundkörpers 1 ausgebildete Öffnungen 3a vom Kernelement 6 überdeckt sind. Das Kernelement 6 ist hierbei vorzugsweise reflektierend ausgebildet, wodurch die optische Detektierbarkeit der Öffnungen 3a durch einen zugeordneten Sensor vereinfacht werden kann.

Der Grundkörper 1 kann mehrere in Längsrichtung L aufeinanderfolgende Taschen 5 zur Aufnahme eines jeweiligen Kernelements 6 aufweisen. Eine jeweilige Tasche weist vorzugsweise eine Erstreckung in Messbandquerrichtung B auf, welche wenigstens 50, weiter bevorzugt wenigstens 75% der Breite des Messbands entspricht. Weiterhin kann die Tasche 5 sich auch über die gesamte Länge des Messbands 10 erstrecken. Hierdurch kann ein im Wesentlichen zweischichtiger Grundkörper des Messbands bereitgestellt werden.

**Fig. 4** zeigt eine Schnittansicht einer weiteren Ausführungsform des Messbands 10, welches analog zur Ausführungsform gemäß Fig. 3 eine Tasche 5 aufweist. Neben den Öffnungen 3a in der ersten Oberfläche 1a weist das Messband zusätzliche Öffnungen 3b in einer gegenüberliegenden Oberfläche 1b des Messbands auf. Diese bilden eine weitere Kodierung auf der gegenüberliegenden Oberfläche 1b aus. Das in der Tasche 5 angeordnete Kernelement 6 überdeckt hierbei die jeweiligen Öffnungen 3a,3b auf den gegenüberliegenden Oberflächen 1a,1b. Das Kernelement 6 weist hierbei eine beidseits ausgebildete reflektierende Oberfläche auf.

Wie bereits zu Fig. 3 angemerkt kann sich die Tasche 5 auch über eine substantielle Länge in Messbandlängsrichtung L erstrecken, insbesondere auch über die gesamte Messbandlänge, und hierbei ein im Wesentlichen zweischichtigen Grundkörper 1 ausbilden.

**Fig. 5** zeigt eine Sensoranordnung 20 zum Zusammenwirken mit dem Messband 10. Die Sensoranordnung 20 ist zur positionssicheren Anordnung an einem Fahrkorb 42 eines Aufzugsystems 40 (vgl. Fig. 1) ausgebildet. Die Sensoranordnung 20 umfasst wenigstens einen optischen Sensor 21, welcher auf eine Messbandoberfläche 1a ausgerichtet ist. Der Sensor 21 kann wenigstens zwei Sensoren 21a,21b aufweisen, welche parallel zur Verlaufsrichtung des Messbands angeordnet sind. Der optische Sensor 21 kann beispielsweise Kameraerfassungsmittel aufweisen und optional eine zugeordnete Lichtquelle.

Die Sensoranordnung 20 kann zusätzlich einen weiteren optischen Sensor 21' umfassen, welcher auf eine zweite Oberfläche 1b des Messbands 10 ausgerichtet ist, um eine hierauf angeordnete optische Kodierung auszulesen.

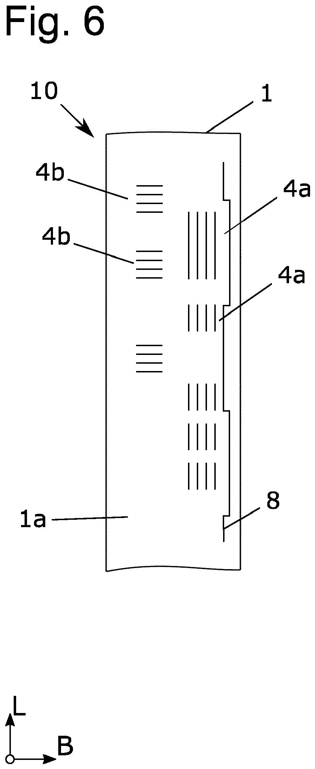

**Fig. 6** zeigt eine weitere bevorzugte Ausführungsform des erfindungsgemäßen Messbands 10. Hierbei ist die optische Kodierung 2 in den Grundkörper 1 durch spezifisch angeordnete und/oder ausgebildete insbesondere parallel zur Messbandlängsrichtung L verlaufende Kettfäden 4a und/oder insbesondere in Messbandquerrichtung B verlaufende Schussfäden 4b gebildet. Die in Fig. 6 lediglich schematisch dargestellte Anordnung bildet ein optisches Kodemarkenmuster aus, welches von einem zugeordneten optischen Sensor 21 ausgelesen werden kann. Die optische Kodierung 2 kann hierbei beispielsweise einen Barcode, einen Data-Matrix Code oder einen QR Code umfassen oder ausbilden.

Die Kett- und/oder Schussfäden 4a,4b können hierbei eine andere Struktur und/oder Färbung als der restliche Textilgrundkörper 1 des Messbands 10 aufweisen. Insbesondere können die Fäden aus wenigstens teiltransparentem oder reflektierendem Garn bestehen. Damit kann durch die Kett- und/oder Schussfäden 4a,4b eine optische Kodierung bereitgestellt werden, unter Beibehaltung eines homogenen Messbandgrundkörpers, d.h. ohne das Vorsehen von zusätzlichen Öffnungen oder Ausnehmungen. Hierdurch kann neben der Bereitstellung einer gleichmäßigen Grundstruktur das Risiko einer Verschmutzung oder eines Verfangens von Gegenständen wie Spänen, Schrauben oder dergleichen im Messband und das damit einhergehende Risiko einer verschlechterten Auslesbarkeit oder eines Bandrisses verhindert werden.

Das Messband 10 kann optional wenigstens eine in den Grundkörper 1 in Längsrichtung L eingearbeitete, insbesondere eingewebte oder eingewirkte, und vorzugsweise nicht-kraftaufnehmend ausgebildete Funktions- und/oder Signalleitung 8 aus leitendem Material, wie beispielsweise Metalldraht, aufweisen. Diese kann zur Signalübertragung entlang des Messbands dienen und an vorgesehenen Kontaktstellen mittels externer Komponenten zur Signalleitung kontaktiert werden.

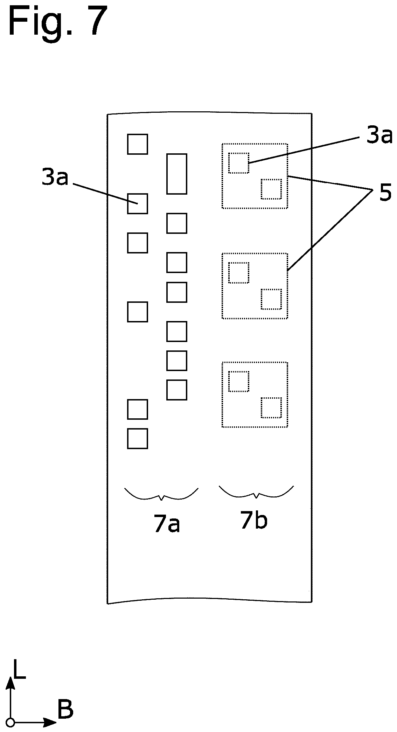

**Fig. 7** zeigt eine weitere bevorzugte Ausführungsform des Messbands 10, aufweisend wenigstens eine erste Spur 7a mit einer optischen Kodierung, insbesondere eine sequenzielle, inkrementelle oder absolute optische Kodierung 2 bildend. Diese kann durch Öffnungen im Messbandgrundkörper 1 oder durch die oben beschriebenen spezifisch angeordneten Kett- und/oder Schussfäden 4a,4b gebildet sein. Das Messband 10 weist zudem wenigstens eine zweite Spur 7b auf, welche vorzugsweise in Messbandlängsrichtung L regelmäßig angeordnete Taschen 5 umfasst, die sich lediglich über eine Breite der Spur 7b erstrecken. Diese können zur Aufnahme von einem zuvor beschriebenen Kernelement 6 und/oder einem anderen Informationsträger wie beispielsweise einem RFID-Chip oder -Tag ausgebildet sein. Eine Öffnung der Taschen kann hierbei in Messbandlängsrichtung oder Breitenrichtung des Messbands verlaufen. Die Taschen 5 können hierbei wenigstens zu einer Oberfläche 1a des Messbandes ausgebildete Öffnungen oder Ausnehmungen 3a aufweisen. Diese können ebenfalls in jeder der Taschen 5 gleichmäßig ausgebildet sein. Durch Einsetzen von individuellen Kernelementen 6 aufweisend entweder eine teilweise reflektierende und/oder keine reflektierende Fläche, kann in den jeweiligen Taschen 5 bzw. an den jeweiligen Positionen des Messbands 10 eine gewünschte Kodierung 2 oder ein gewünschte Position, wie beispielsweise ein Inspektionsendschalter oder ein Schacht-Endschalter erzeugt bzw. ausgebildet werden (vgl. Fig. 1).

Die oben beschriebenen Ausführungsformen sind lediglich beispielhaft, wobei die Erfindung keineswegs auf die in den Figuren gezeigten Ausführungsformen beschränkt ist. Insbesondere kann die Form, Größe und Anordnung der optischen Kodierung im Textilbandgrundkörper abweichend von den dargestellten Ausführungsformen ausgebildet sein.

### Bezugszeichenliste

- 1: Grundkörper Messband
- 1a, 1b: erste, zweite Oberfläche Messband
- 2: optische Kodierung
- 3a,3b: Öffnungen, Ausbrüche
- 4a,4b: Kett- und Schussfäden
- 5: Tasche
- 5a: Öffnung
- 5b: umlaufende Innenkante
- 6: Kernelement
- 7a,7b: erste, zweite Spur
- 8: Signalleitung
- 10: Messband
- 20: Sensoranordnung
- 21,21a,b: optischer Sensor
- 21': optionaler Sensor
- 30: Messsystem
- 40: Aufzugssystem
- 41: Aufzugsschacht
- 42: Fahrkorb
- 43a-d: Stockwerke
- 44a,44b: Befestigungsmittel
- 45: Inspektionsendschalter
- 46: Schachtendschalters
- 47: vordefinierter Messbandabschnitt

## Patentansprüche

1. Messband zur Bestimmung der Position eines Fahrkorbs (42) in einem Aufzugschacht (41), welches vertikal im Aufzugschacht und vorzugsweise sich über wenigstens zwei Gebäudestockwerke (43a,43b,43c,43d) erstreckend anordenbar ist, aufweisend einen bandförmigen Grundkörper (1) und eine optische Kodierung (2), **dadurch gekennzeichnet, dass** der bandförmige Grundkörper (1) aus Textilmaterial gebildet ist, und dass die optische Kodierung (2) in den Grundkörper eingebracht oder auf einer Oberfläche (1a) des Grundkörpers aufgebracht angeordnet ist.

2. Messband nach Anspruch 1, **dadurch gekennzeichnet, dass** der bandförmige Grundkörper (1) aus Textilmaterial, insbesondere Textilfaser, gewebt oder gewirkt ist.

3. Messband nach Anspruch 1 oder 2, **dadurch gekennzeichnet, dass** die Kodierung (2) im Grundkörper (1) eingebrachte Öffnungen (3a,3b) aufweist, welche vorzugsweise hinsichtlich Form und/oder Anordnung in Messbandlängsrichtung (L) variierend ausgebildet sind, und/oder dass die optische Kodierung (2) mehrere aufeinanderfolgende Positionsmuster umfasst, insbesondere aufweisend Barcodes, Data-Matrix Codes oder QR Codes.

4. Messband nach einem der vorhergehenden Ansprüche, **dadurch gekennzeichnet, dass** die optische Kodierung (2) durch spezifisch angeordnete und/oder ausgebildete, längs zur Messbandlängsrichtung (L) verlaufende Kettfäden (4b) und/oder in Messbandquerrichtung (B) verlaufende Schussfäden (4a) gebildet ist, welche vorzugsweise eine andere Struktur und/oder Färbung aufweisen, als der restliche Grundkörper (1) des Messbands.

5. Messband nach einem der vorhergehenden Ansprüche, **dadurch gekennzeichnet, dass** die optische Kodierung (2) auf den Grundkörper (1) aufgedruckt oder aufgeklebt ist.

6. Messband nach einem der vorhergehenden Ansprüche, **dadurch gekennzeichnet, dass** der Grundkörper (1) wenigstens eine Tasche (5) zur Aufnahme eines vorzugsweise reflektierenden, insbesondere retroreflektierenden, Kernelements (6) aufweist, welches vorzugweise derart im Inneren des Grundkörpers (1) angeordnet ist, dass im Grundkörper ausgebildete Öffnungen (3a,3b) durch das Kernelement (6) überdeckt sind.

7. Messband nach einem der vorhergehenden Ansprüche, **dadurch gekennzeichnet, dass** das Messband (10) eine erste Oberfläche (1a) und eine gegenüberliegende zweite Oberfläche (1b) aufweist, wobei die erste und die zweite Oberfläche (1a,1b) jeweils eine unterschiedliche Kodierung aufweisen, wobei vorzugsweise zwischen der ersten und zweiten Oberfläche (1a, 1b) ein Kernelement (6) im Inneren des Grundkörpers (1) angeordnet ist, welches in der ersten und zweiten Oberfläche (1a,1b) ausgebildete Öffnungen (3a,3b) überdeckt.

8. Messband nach einem der vorhergehenden Ansprüche, **dadurch gekennzeichnet, dass** das Messband (10) einlagig oder zweilagig ausgebildet ist.

9. Messband nach einem der vorhergehenden Ansprüche, **dadurch gekennzeichnet, dass** die Kodierung (2) in wenigstens zwei Spuren (7a,7b) auf einer Oberfläche (1a,1b) des Messbands (10) angeordnet ist und/oder dass die Kodierung (2) eine alternierende, sequentielle oder absolute Positionskodierung ausbildet.

10. Messband nach einem der vorhergehenden Ansprüche, **dadurch gekennzeichnet, dass** der Grundkörper (1) wenigstens eine in Längsrichtung (L) eingearbeitete, insbesondere eingewebte oder eingewirkte, und vorzugsweise nicht-kraftaufnehmend ausgebildete Funktions- und/oder Signalleitung (8) aufweist.

11. Messband nach einem der vorhergehenden Ansprüche, **dadurch gekennzeichnet, dass** der Grundkörper (1) mehrere vorzugsweise in Messbandlängsrichtung regelmäßig angeordnete Taschen (5) aufweist, welche zur Aufnahme eines Kernelements (6) und/oder eines anderen Informationsträgers, insbesondere eines RFID-Chips, ausgebildet sind.

12. Messsystem aufweisend ein Messband (10) gemäß einem der vorhergehenden Ansprüche und eine Sensoranordnung (20) aufweisend wenigstens einen optischen Sensor (21) zur Auslesung der optischen Kodierung (2) des Messbands (10).

13. Messsystem nach Anspruch 12, **dadurch gekennzeichnet, dass** die Sensoranordnung (20) wenigstens zwei in Messbandlängsrichtung (L) zueinander versetzt angeordnete optische Sensoren (21a,21b) aufweist und/oder dass die Sensoranordnung (20) wenigstens zwei optische Sensoren (21,21') zur Auslesung einer Kodierung auf einer ersten und zweiten Oberfläche (1a, 1b) des Messbands (10) umfasst.

14. Messsystem nach einem der Ansprüche 12 oder 13, **dadurch gekennzeichnet, dass** der optische Sensor (21) der Sensoranordnung (20) eine Lichtquelle und Kameraerfassungsmittel aufweist.

15. Aufzugsystem mit einem Aufzugschacht (41) und einen darin verfahrbar angeordneten Fahrkorb (42), welches ein Messsystem (30) zur Bestimmung der Position des Fahrkorbs (42) im Aufzugschacht (41) gemäß einem der Ansprüche 12 bis 14 aufweist.

## Claims

1. A tape measure for determining the position of an elevator car (42) in an elevator shaft (41), the tape measure being disposable vertically in the elevator shaft and preferably so as to extend across at least two floors (43a, 43b, 43c, 43d), the tape measure having a tape-shaped base body (1) and optical coding (2), **characterized in that** the tape-shaped base body (1) is made of a textile material and **in that** the optical coding (2) is inserted in the base body or is applied on a surface (1a) of the base body.

2. The tape measure according to claim 1, **characterized in that** the tape-shaped base body (1) is weaved or knitted of a textile material, in particular textile fibers.

3. The tape measure according to claim 1 or 2, **characterized in that** the coding (2) has openings (3a, 3b) which are inserted in the base body (1) and preferably are variably formed along the tape-measure length (L) regarding shape and/or arrangement and/or **in that** the optical coding (2) comprises several consecutive position patterns, in particular having barcodes, data matrix codes or QR codes.

4. The tape measure according to any one of the preceding claims, **characterized in that** the optical coding (2) is formed by specifically disposed and/or formed warp threads (4b) which extend longitudinally to the tape-measure length (L) and/or weft threads (4a) which extend along the tape-measure width (B), the warp threads (4b) and the weft threads (4a) preferably having a different structure and/or coloring than the remaining base body (1) of the tape measure.

5. The tape measure according to any one of the preceding claims, **characterized in that** the optical coding (2) is printed or glued on the base body (1).

6. The tape measure according to any one of the preceding claims, **characterized in that** the base body (1) has at least one pocket (5) for accommodating a preferably reflective, in particular retroreflective, core element (6) which preferably is disposed in such a manner in the interior of the base body (1) that openings (3a, 3b) formed in the base body are covered by the core element (6).

7. The tape measure according to any one of the preceding claims, **characterized in that** the tape measure (10) has a first surface (1a) and an opposite second surface (1b), the first and the second surface (1a, 1b) each having different coding, a core element (6) being disposed in the interior of the base body (1) preferably between the first and second surface (1a, 1b), the core element (6) covering openings (3a, 3b) formed in the first and second surface (1a, 1b).

8. The tape measure according to any one of the preceding claims, **characterized in that** the tape measure (10) is single or double-layered.

9. The tape measure according to any one of the preceding claims, **characterized in that** the coding (2) is disposed on a surface (1a, 1b) of the tape measure (10) in at least two lanes (7a, 7b) and/or **in that** the coding (2) forms an alternating, sequential or absolute position coding.

10. The tape measure according to any one of the preceding claims, **characterized in that** the base body (1) has a functionality and/or signal line (8) worked, in particular weaved or knitted, along the length (L) and preferably formed to not absorb force.

11. The tape measure according to any one of the preceding claims, **characterized in that** the base body (1) has several pockets (5) which are preferably disposed regularly along the tape-measure length and are formed for accommodating a core element (6) and/or a different information carrier, in particular an RFID chip.

12. A measuring system comprising a tape measure (10) according to any one of the preceding claims and a sensor arrangement (20) comprising at least one optical sensor (21) for reading the optical coding (2) of the tape measure (10).

13. The measuring system according to claim 12, **characterized in that** the sensor arrangement (20) has at least two optical sensors (21a, 21b) disposed at an offset to each other along the tape-measure length (L) and/or **in that** the sensor arrangement (20) comprises at least two optical sensors (21, 21') for reading a coding on a first and second surface (1a, 1b) of the tape measure (10).

14. The measuring system according to any one of the claims 12 to 13, **characterized in that** the optical sensor (21) of the sensor arrangement (20) has a light source and camera registration elements.

15. An elevator system having an elevator shaft (41) and an elevator car (42) displaceable therein and having a measuring system (30) for determining the position of the elevator car (42) in the elevator shaft (41) according to any one of the claims 12 to 14.

## Revendications

1. Bande de mesure pour déterminer la position d'une cabine d'ascenseur (42) dans une cage d'ascenseur (41), la bande de mesure pouvant être disposée verticalement dans la cage d'ascenseur et de préférence de manière à s'étendre sur au moins deux étages (43a, 43b, 43c, 43d), la bande de mesure ayant un corps de base (1) en forme de bande et un codage (2) optique, **caractérisée en ce que** le corps de base (1) en forme de bande est constitué d'un matériau textile et **en ce que** le codage (2) optique est inséré dans le corps de base ou est appliqué sur une surface (1a) du corps de base.

2. Bande de mesure selon la revendication 1, **caractérisée en ce que** le corps de base (1) en forme de bande est tissé ou tricoté d'un matériau textile, notamment de fibres textiles.

3. Bande de mesure selon la revendication 1 ou la revendication 2, **caractérisée en ce que** le codage (2) a des ouvertures (3a, 3b) qui sont insérées dans le corps de base (1) et sont de préférence formées de manière variable le long de la longueur (L) de la bande de mesure en ce qui concerne la forme et/ou la disposition et/ou **en ce que** le codage (2) optique comprend plusieurs motifs de position consécutifs, notamment ayant des codes-barres, des codes Data Matrix ou des codes QR.

4. Bande de mesure selon l'une quelconque des revendications précédentes, **caractérisée en ce que** le codage (2) optique est formé par des fils de chaîne (4b) spécifiquement disposés et/ou formés et s'étendant longitudinalement à la longueur (L) de la bande de mesure et/ou par des fils de trame (4a) s'étendant le long de la largeur (B) de la bande de mesure, les fils de chaîne (4b) et les fils de trame (4a) ayant de préférence une structure et/ou une coloration différente de celle du reste du corps de base (1) de la bande de mesure.

5. Bande de mesure selon l'une quelconque des revendications précédentes, **caractérisée en ce que** le codage (2) optique est imprimé ou collé sur le corps de base (1).

6. Bande de mesure selon l'une quelconque des revendications précédentes, **caractérisée en ce que** le corps de base (1) a au moins une poche (5) pour recevoir un élément de noyau (6) de préférence réfléchissant, notamment rétroréfléchissant, l'élément de noyau (6) étant de préférence disposé à l'intérieur du corps de base (1) de telle manière que des ouvertures (3a, 3b) formées dans le corps de base sont couvertes par l'élément de noyau (6).

7. Bande de mesure selon l'une quelconque des revendications précédentes, **caractérisée en ce que** la bande de mesure (10) a une première surface (1a) et une deuxième surface opposée (1b), la première et la deuxième surface (1a, 1b) ayant chacune un codage différent, un élément de noyau (6) étant disposé à l'intérieur du corps de base (1) de préférence entre la première et la deuxième surface (1a, 1b), l'élément de noyau (6) recouvrant des ouvertures (3a, 3b) formées dans la première et la deuxième surface (1a, 1b).

8. Bande de mesure selon l'une quelconque des revendications précédentes, **caractérisée en ce que** la bande de mesure (10) est couche simple ou couche double.

9. Bande de mesure selon l'une quelconque des revendications précédentes, **caractérisée en ce que** le codage (2) est disposé sur une surface (1a, 1b) de la bande de mesure (10) dans au moins deux voies (7a, 7b) et/ou **en ce que** le codage (2) forme un codage de position alternatif, séquentiel ou absolu.

10. Bande de mesure selon l'une quelconque des revendications précédentes, **caractérisée en ce que** le corps de base (1) a un câble (8) de fonction et/ou de signal travaillé, notamment tissé ou tricoté, le long de la longueur (L) et de préférence formé pour ne pas absorber la force.

11. Bande de mesure selon l'une quelconque des revendications précédentes, **caractérisée en ce que** le corps de base (1) a plusieurs poches (5) qui sont de préférence disposées régulièrement le long de la longueur de la bande de mesure et sont formées pour recevoir un élément de noyau (6) et/ou un support d'information différent, notamment une puce RFID.

12. Système de mesure ayant une bande de mesure (10) selon l'une quelconque des revendications précédentes et un ensemble de capteur (20) comprenant au moins un capteur (21) optique pour lire le codage (2) optique de la bande de mesure (10).

13. Système de mesure selon la revendication 12, **caractérisé en ce que** l'ensemble de capteur (20) a au moins deux capteurs (21a, 21b) optiques disposés à un décalage l'un par rapport à l'autre le long de la longueur (L) de la bande de mesure et/ou **en ce que** l'ensemble de capteur (20) comprend au moins deux capteurs (21, 21') optiques pour lire un codage sur une première et une deuxième surface (1a, 1b) de la bande de mesure (10).

14. Système de mesure selon l'une quelconque des revendications 12 ou la revendication 13, **caractérisé en ce que** le capteur (21) optique de l'ensemble de capteur (20) a une source lumineuse et des éléments d'enregistrement de caméra.

15. Système d'ascenseur ayant une cage d'ascenseur (41) et une cabine d'ascenseur (42) déplaçable dans celle-ci et ayant un système de mesure (30) pour déterminer la position de la cabine d'ascenseur (42) dans la cage d'ascenseur (41) selon l'une quelconque des revendications 12 à 14.
